# EUROPEAN PATENT APPLICATION

(11) **EP 4 471 453 A1**
(43) Date of publication of application: **04.12.2024**
(21) Application number: 23770100.8
(22) Date of filing: 19.01.2023
(51) Int. Cl.: G01S 7/51, G01S 7/497, G01S 17/89

(54) **SENSOR SYSTEM AND CONTROL METHOD THEREFOR**

(30) Priority: 14.03.2022 JP 2022039051
(71) Applicant: OMRON Corporation, Kyoto 600-8530 (JP)
(72) Inventor: IWAMOTO, Shintaro, Kyoto-shi, Kyoto 600-8530 (JP)
(74) Representative: Isarpatent
(86) International application number: PCT/JP2023/001573
(87) International publication number: WO 2023/176137

(57) **Abstract**

A processing device includes a highly reflective object detector, an attention area definer, and an information displaying unit. The highly reflective object detector determines whether a highly reflective object with a reflection intensity higher than a predetermined reference is located within a measurement area of the sensor based on measurement data. The attention area definer defines, when the highly reflective object is detected, an attention area between the highly reflective object and the sensor. The attention area is an area with a likelihood of being affected by the highly reflective object to cause the sensor to have lower measurement accuracy. The information displaying unit causes the attention area to be superimposed on a range image displayed on a display.

## Description

### FIELD

The present invention relates to a reflective range sensor.

### BACKGROUND

Known reflective sensors measure the distance to an object by emitting electromagnetic waves such as light or radio waves and observing reflected electromagnetic waves from the object. Such reflective sensors may have the measurement accuracy that can easily vary depending on the environment (refer to, for example, Patent Literature 1). In particular, when a measurement target is located close to a highly reflective object that is located immediately behind (in other words, when a measurement target is located in front of a background including a highly reflective object, or hereafter referred to as a highly reflective background, as viewed from the sensor), the measurement target is not easily separable from the highly reflective background in the detection process and may thus be misidentified with many algorithms as being located backward from its actual position. This phenomenon is herein referred to as misidentification of an object as being more distant.

### CITATION LIST

### PATENT LITERATURE

Patent Literature 1: Japanese Unexamined Patent Application Publication No. 2021-196342

### SUMMARY

### TECHNICAL PROBLEM

In the field of factory automation (FA), reflective sensors are widely used to detect humans or objects. For example, a sensor system called a safety laser scanner is a type of safety sensor that detects a human or an object entering a predetermined monitoring area and outputs a signal for stopping a device. A highly reflective background may cause the sensor system to misidentify, as being more distant, a human or an object that is actually at a position for which the device is to be stopped. This may delay output of the signal for stopping the device, possibly causing a dangerous situation.

This issue is difficult to solve under the principle of reflective sensors. The handling (operational rules) is thus defined to avoid risks. For example, the user instructions for the sensor system may be defined to note any site including a highly reflective background that may affect the measurement accuracy, and recommend defining a monitoring area to reflect possible measurement errors at such a site.

When a factory includes a highly reflective background, the user typically selects one of two responses described below.
(1) Moving the highly reflective object, adding a blocking object in front of the highly reflective object, or attaching the sensor at a different angle. These can prevent detection light from reaching the highly reflective object.
(2) The manufacturer's precautions are followed, and a monitoring area is defined based on possible measurement errors at a site including the highly reflective object.

In either of (1) or (2), the position of the highly reflective background that may affect measurement in a measurement area of the sensor and the extent of errors to be caused by the highly reflective background are to be correctly identified for proper handling of the issue. However, no techniques have been available for objectively identifying the presence of the highly reflective background and the range to be affected by the highly reflective background. Thus, such responses have been practiced through repeated trial and error or based on the experience or intuition of a skilled worker or an expert. For (2) in particular, proper setting is difficult for inexperienced workers and is often time-consuming for skilled workers or experts as well, because the distance from the highly reflective background varies depending on the material (reflectance), the relative position, or the angle of the highly reflective object or the size of an object to be detected.

In response to the above issue, one or more aspects of the present invention are directed to a technique for easily and objectively determining the presence of a highly reflective background and the range to be affected by the highly reflective background.

### SOLUTION TO PROBLEM

A sensor system according to an aspect of the present disclosure includes a sensor that measures a distance to an object by emitting electromagnetic waves and observing reflected electromagnetic waves from the object, a processing device that generates a range image indicating a distance to an object in a surrounding of the sensor based on measurement data obtained by the sensor measuring areas in a plurality of directions, and a display that displays the range image generated by the processing device. The processing device includes a highly reflective object detector, an attention area definer, and an information displaying unit. The highly reflective object detector determines whether a highly reflective object is located within a measurement area of the sensor based on the measurement data. The highly reflective object is an object with a reflection intensity higher than a predetermined reference. The attention area definer defines, when the highly reflective object detector detects the highly reflective object, an attention area between the highly reflective object and the sensor. The attention area is an area with a likelihood of being affected by the highly reflective object to cause the sensor to have lower measurement accuracy. The information displaying unit causes the attention area defined by the attention area definer to be superimposed on the range image displayed on the display.

The sensor may include a light source, a scanner that emits light output from the light source in the plurality of directions, and a light receiver that receives reflected light from an object.

The processing device may include a monitoring area definer that defines a monitoring area within the measurement area of the sensor. The sensor may monitor the monitoring area. The information displaying unit may cause the monitoring area to be superimposed on the range image.

The information displaying unit may cause the attention area to be superimposed on the range image when the monitoring area is located between the attention area and the sensor, and cause the attention area to be hidden when the monitoring area is not located between the attention area and the sensor.

The information displaying unit may cause a warning to be displayed on the range image when the monitoring area at least partially overlaps the attention area.

When the monitoring area at least partially overlaps the attention area, the information displaying unit may recommend a corrected version of the monitoring area corrected not to overlap the attention area.

The attention area definer may define, as the attention area, an area with a predetermined width extending from the highly reflective object toward the sensor.

The attention area definer may determine the predetermined width based on a reflection intensity of the highly reflective object.

The sensor system may include a report output unit that outputs information indicating a calculation process performed by the attention area definer to determine the predetermined width.

The attention area definer may allow a user to set the predetermined width.

A method for controlling a sensor system according to an aspect of the present disclosure includes measuring, generating, displaying, determining, defining, and superimposing. The measuring is measuring, with a sensor, areas in a plurality of directions. The sensor measures a distance to an object by emitting electromagnetic waves and observing reflected electromagnetic waves from the object. The generating is generating a range image indicating a distance to an object in a surrounding of the sensor based on measurement data obtained by the sensor. The displaying is displaying the range image with a display. The determining is determining whether a highly reflective object is located within a measurement area of the sensor based on the measurement data. The highly reflective object is an object with a reflection intensity higher than a predetermined reference. The defining is defining, when the highly reflective object is detected, an attention area between the highly reflective object and the sensor. The attention area is an area with a likelihood of being affected by the highly reflective object to cause the sensor to have lower measurement accuracy. The superimposing is superimposing the defined attention area on the range image displayed on the display.

A program according to an aspect of the present disclosure is for causing a processor in a processing device to perform operations including obtaining, generating, displaying, determining, defining, and superimposing. The obtaining is obtaining measurement data obtained by measuring, with a sensor, areas in a plurality of directions. The sensor measures a distance to an object by emitting electromagnetic waves and observing reflected electromagnetic waves from the object. The generating is generating a range image indicating a distance to an object in a surrounding of the sensor based on the measurement data. The displaying is displaying the range image with a display. The determining is determining whether a highly reflective object is located within a measurement area of the sensor based on the measurement data. The highly reflective object is an object with a reflection intensity higher than a predetermined reference. The defining is defining, when the highly reflective object is detected, an attention area between the highly reflective object and the sensor. The attention area is an area with a likelihood of being affected by the highly reflective object to cause the sensor to have lower measurement accuracy. The superimposing is superimposing the defined attention area on the range image displayed on the display.

One or more aspects of the present invention may be directed to a sensor system with at least one or more of the above elements or functions, or to a safety system or an FA system including the sensor system. One or more aspects of the present invention may also be directed to a method for controlling or setting a sensor system including at least one or more of the above processes, a method for displaying a highly reflective object, or a method for setting a monitoring area. One or more aspects of the present invention may further be directed to a program for implementing the above method, or a non-transitory computer-readable storage medium storing the program. The above elements and processes may be combined with one another in any manner to form one or more aspects of the present invention.

### ADVANTAGEOUS EFFECTS

One or more embodiments of the present invention allow easy and objective determination of the presence of the highly reflective background and the range to be affected by the highly reflective background.

### BRIEF DESCRIPTION OF THE DRAWINGS

FIG. 1 is a diagram showing an example use of a sensor system.
FIG. 2 is a schematic diagram of the sensor system.
FIG. 3 is a functional block diagram of a controller.
FIG. 4 is a flowchart of a processing example 1 of the sensor system.
FIG. 5 is a diagram of example range images.
FIG. 6 is a diagram of an example display of a range image.
FIG. 7 is a flowchart of a processing example 2 of the sensor system.
FIG. 8 is a diagram of an example warning display in the processing example 2.
FIG. 9 is a flowchart of a processing example 3 of the sensor system.
FIG. 10 is a diagram of an example recommendation display in the processing example 3.

### DETAILED DESCRIPTION

### <Example Use>

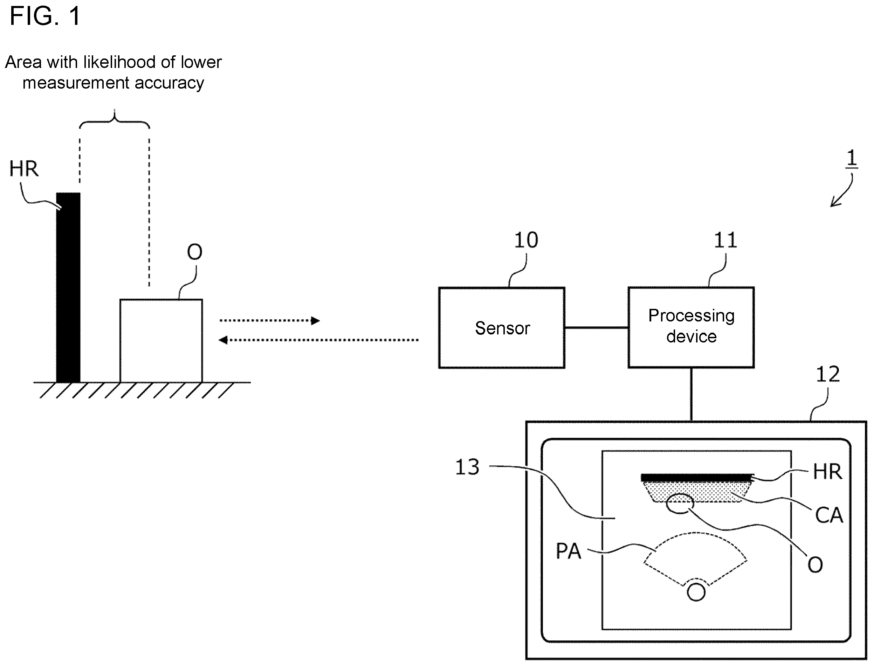

One example use of the present invention will now be described with reference to FIG. 1.

A sensor system 1 includes a reflective sensor 10, a processing device 11, and a display 12. The sensor system 1 may include the sensor 10, the processing device 11, and the display 12 integrally included in a housing, or may include the sensor 10, the processing device 11, and the display 12 that are separate devices connected to one another with a wire or wirelessly. The sensor system 1 may be a computer (e.g., a personal computer or a PC, a tablet terminal, a pendant terminal, or a controller) that functions as the processing device 11 and the display 12 connected to the sensor 10 with a wire or wirelessly.

At a site including a highly reflective object HR, the reflective sensor 10 may theoretically have lower measurement accuracy in measuring the distance to an object O in front of the highly reflective object HR. Thus, when the sensor system 1 is installed or set, any relevant response is to be taken based on whether a highly reflective object HR is included in a measurement area (field of view) of the sensor 10 or based on any resultant measurement errors. However, humans may not easily determine such effects on the measurement of the sensor 10 accurately.

In the sensor system 1, the processing device 11 generates, based on measurement data obtained by the sensor 10 that measures areas in multiple directions, a range image 13 showing the distances to objects in the surroundings of the sensor 10. The range image 13 is displayed on the display 12. The processing device 11 also determines whether a highly reflective object HR is located in the measurement area of the sensor 10 based on the measurement data. When detecting a highly reflective object HR, the processing device 11 defines an area (referred to as an attention area) with the likelihood of being affected by the highly reflective object HR to cause the sensor 10 to have lower measurement accuracy, and superimposes an attention area CA on the range image 13. When a monitoring area PA to be monitored by the sensor system 1 has been defined, the monitoring area PA may be superimposed on the range image 13.

With information displayed in this manner, for example, the presence of the highly reflective object HR, the attention area CA corresponding to the range to be affected by the highly reflective object HR, and the positional relationship between the attention area CA and the monitoring area PA are visualized. This allows the user to easily and objectively determine whether any response is to be taken against the highly reflective object HR or portions for which the response is to be taken. This allows anyone to install and set the sensor system 1 properly.

The reflective sensor herein refers to a sensor that observes electromagnetic waves reflected from an object to measure the distance to the object. Examples of the reflective sensor include a range sensor using laser light (e.g., a light detection and ranging sensor or a LiDAR sensor) and a range sensor using radio waves (e.g., a millimeter wave radar). The reflective sensor may use any measurement method, such as the time-of-flight (ToF) method or the triangular distance measurement method. Measurement of objects located in multiple directions is achieved using an area sensor that covers a two-dimensional or three-dimensional measurement area (field of view).

The range image shows the distances to objects each being the nearest object in each direction from the position of the sensor as a reference (the center). For the sensor covering a two-dimensional measurement area, the range image that is easy to understand is a plan view (two-dimensional map) of the measurement area. For the sensor covering a three-dimensional measurement area, the range image that is easy to understand is a sectional view of the three-dimensional measurement area or a projection view of the three-dimensional measurement area projected on a plane. The range image is not limited to the forms described above and may be in any form. For example, the range image may use the luminance or the colors of individual pixels to indicate distances or use computer graphics (CG) to represent a three-dimensional space.

The highly reflective object has a reflection intensity higher than a predetermined reference. The predetermined reference depends on the type or performance of the sensor, the transmission intensity of electromagnetic waves, and other factors, and thus may be set as appropriate based on the sensor. For example, a reflection intensity that causes significant reduction in the measurement accuracy may be experimentally determined using the sensor. The predetermined reference may be determined based on the reflection intensity. Examples of the highly reflective object at a factory include an acrylic plate, stainless steel equipment, reflective tape, and a mirror.

The measurement area is an entire portion of the field of view of the sensor, or in other words, a range that the sensor can measure with its performance capabilities. The monitoring area is an area monitored by the sensor, or in other words, an area in which an object detected can trigger predetermined control (e.g., outputting a detection signal, outputting an alert, or stopping or decelerating another device). The monitoring area is defined within the measurement area or is a part of the measurement area.

### <Embodiments>

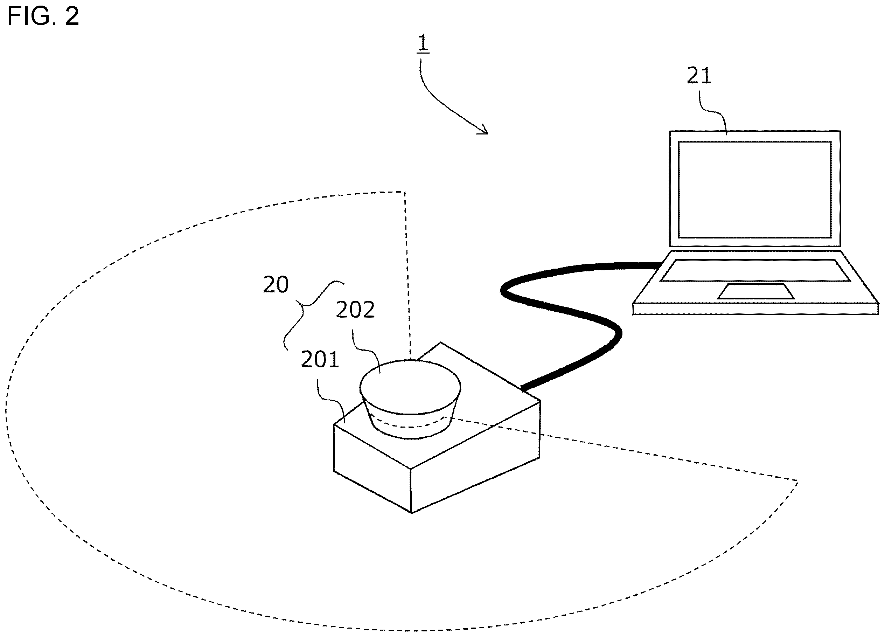

One or more embodiments of the present invention will be described with reference to FIG. 2.

The sensor system 1 according to the present embodiment includes a safety laser scanner 20 as a type of reflective sensor, and a controller 21. The safety laser scanner 20 (hereafter simply referred to as a laser scanner or a sensor) is connected to the controller 21 with a universal serial bus (USB) cable or a local area network (LAN) cable.

The laser scanner 20 is a safety sensor compliant with safety standards such as ISO 13849-1, and is used in, for example, safety monitoring of industrial equipment at a factory, automated guided vehicles, eyes of mobile robots, and various other applications.

The laser scanner 20 mainly includes a scanner body 201 with a window 202 in the shape of an inverted frustum of a cone. The scanner body 201 includes, for example, a light source, an optical system, a light receiver, a control circuit, and an indicator lamp. The window 202 is formed from a material that transmits laser light and protects the optical system such as a polygon mirror. The laser scanner 20 can scan the angle of about 270 degrees around it using laser light output from the light source and reflected from the polygon mirror (scanner) spinning in the window 202. Reflected light from an object is guided into the light receiver through the optical system and photoelectrically converted. The broken line in FIG. 2 indicates the scanning range with laser light.

The controller 21 functions as a processing device and a display. The controller 21 may be a dedicated device or a general-purpose computer. In the present embodiment, the controller 21 is a common personal computer installed with a tool (software program) for setting the laser scanner 20. In this case, the controller 21 includes hardware resources such as a processor (central processing unit or CPU), a memory, a storage, a communication interface (I/F), an input device, and a display to implement the functions as a processing device (described later) by expanding a program stored in the storage onto the memory and executing the program with the processor. The controller 21 may have a different configuration. For example, the functions may be entirely or partially implemented with circuits such as application-specific integrated circuits (ASICs) or field-programmable gate arrays (FPGAs) or may be implemented with a cloud server or another device.

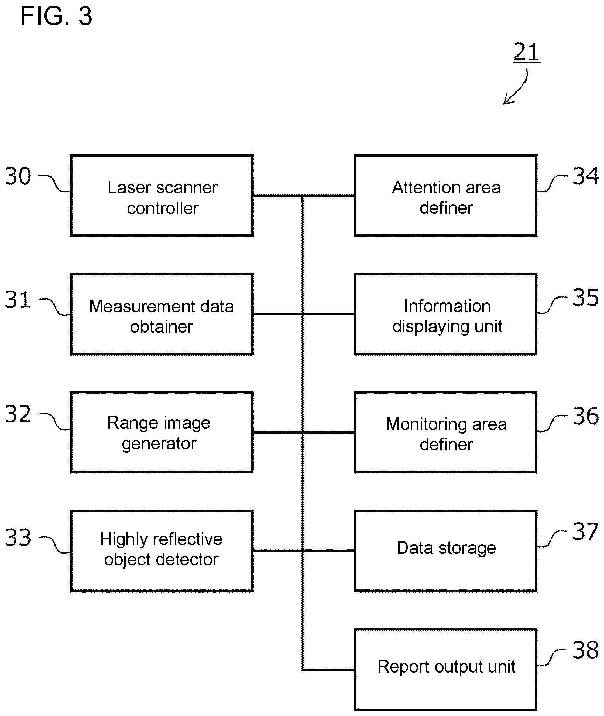

FIG. 3 is a functional block diagram of the controller 21.

The controller 21 includes, as its main functional components, a laser scanner controller 30, a measurement data obtainer 31, a range image generator 32, a highly reflective object detector 33, an attention area definer 34, an information displaying unit 35, a monitoring area definer 36, a data storage 37, and a report output unit 38.

The laser scanner controller 30 controls the measurement operation performed by the laser scanner 20. The measurement data obtainer 31 obtains measurement data from the laser scanner 20. The range image generator 32 generates a range image based on the measurement data in multiple directions. The highly reflective object detector 33 determines whether a highly reflective object is located within the measurement area of the laser scanner 20 based on the measurement data. The attention area definer 34 defines the attention area. The information displaying unit 35 outputs, to the display, various pieces of information, such as information obtained with the laser scanner 20 or information about the settings of the laser scanner 20. The monitoring area definer 36 defines the monitoring area inside the measurement area. The data storage 37 stores, for example, the measurement data obtained from the laser scanner 20, the detection result of the highly reflective object, the setting information about areas such as the attention area and the monitoring area, and the range image. The report output unit 38 outputs various pieces of information about defining the attention area and the monitoring area. Information processing based on these functions is described in detail below.

### <Processing Example 1>

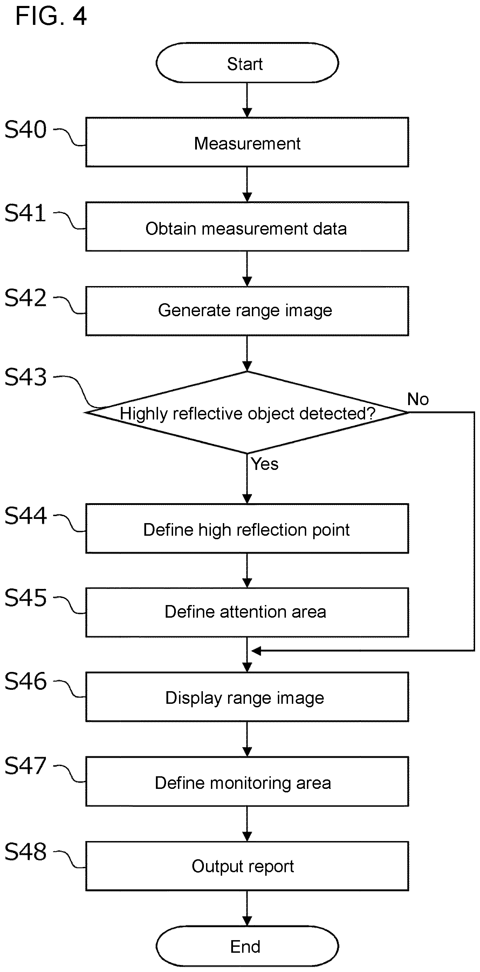

FIG. 4 is a flowchart of a processing example of the sensor system 1.

In step S40, the laser scanner controller 30 in the controller 21 controls the laser scanner 20 to scan the measurement area and measures areas in multiple directions from the laser scanner 20 as a reference (the center). In step S41, the measurement data obtainer 31 obtains measurement data in each direction (each angle) from the laser scanner 20. The measurement data may include information about the distance to an object (the nearest reflective object) located in each direction and information about the reflection intensity of laser light. The measurement data may include, instead of the information about the reflection intensity, a highly reflective object determination result about whether each object is a highly reflective object. The received measurement data is linked to the information corresponding to the directions (angles) and stored into the data storage 37. For example, the laser scanner 20 having the measurement area covering an angle of about 270 degrees and the angular resolution of about 0.4 degrees can obtain about 670 pieces of measurement data in a single scan.

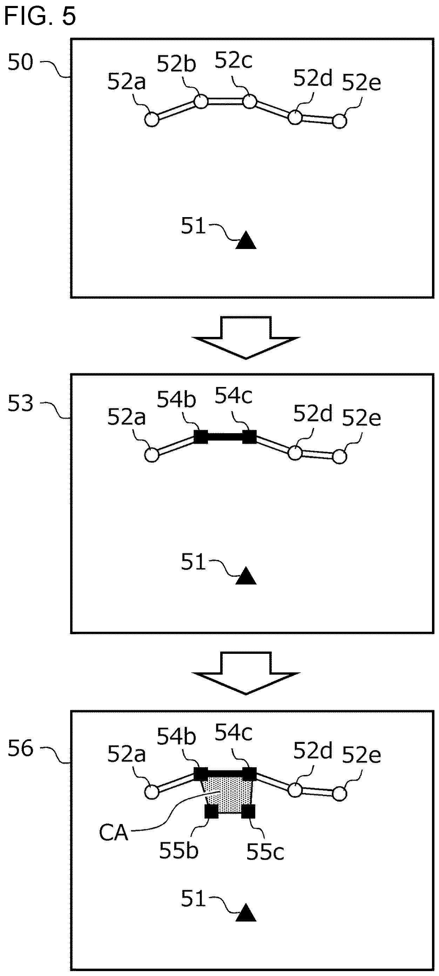

In step S42, the range image generator 32 generates a range image based on the measurement data in the multiple directions received in step S41. More specifically, the range image generator 32 calculates the position of an object located in one direction as viewed from the laser scanner 20 based on the range information in a piece of measurement data corresponding to that direction, or in other words, calculates the coordinates on the range image. The range image generator 32 then plots a point (hereafter referred to as a reflection point) indicating the object at the positional coordinates of the object on the range image. This operation is repeated for the pieces of measurement data corresponding to all directions, and about 670 reflection points are plotted around the laser scanner 20 in the range image. In the present embodiment, adjacent reflection points are connected with line segments. The reflection points and the line segments are illustrated in the same color (e.g., blue). The reference numeral 50 in FIG. 5 indicates an example range image. A mark 51 in the range image 50 indicates the position of the laser scanner 20. The reference numerals 52a to 52e indicate the reflection points. FIG. 5 shows five reflection points 52a to 52e alone for ease of explanation. An actual range image, however, is to show several hundred or more (in the present embodiment, about 670) reflection points.

In step S43, the highly reflective object detector 33 detects highly reflective objects based on the measurement data. More specifically, the highly reflective object detector 33 compares each reflection intensity included in the measurement data with the predetermined reference. When the reflection intensity is higher than the predetermined reference, the highly reflective object detector 33 determines that a highly reflective object is located in the corresponding direction, or in other words, the reflection point in the direction is a reflection point (hereafter also referred to as a high reflection point) of a highly reflective object.

When one or more high reflection points are detected, the highly reflective object detector 33 changes the color of the points corresponding to the high reflection points among the multiple reflection points plotted on the range image, and the color of the line segments connecting the high reflection points to a different color (e.g., red) in step S44. The reference numeral 53 in FIG. 5 indicates an example range image with high reflection points 54b and 54c. The normal reflection points 52a, 52d, and 52e are illustrated as outlined white circles, and the high reflection points 54b and 54c are illustrated as solid black squares for ease of illustration. The circles and the squares may be illustrated in different colors in an actual range image. In this example, two reflection points 52b and 52c are determined to be the high reflection points 54b and 54c.

In step S45, the attention area definer 34 defines the attention area CA between the highly reflective object and the laser scanner 20. More specifically, the attention area definer 34 first calculates the offset amount for each of the detected high reflection points 54b and 54c. The offset amounts correspond to the width by which the attention area is to extend from the position of the high reflection point toward the front (the sensor), or in other words, to an area with the likelihood of being affected by the highly reflective object and causing the laser scanner 20 to have lower measurement accuracy. The attention area definer 34 then sets offset points 55b and 55c at positions shifted from the high reflection points 54b and 54c toward the laser scanner 20 (mark 51) by distances corresponding to the respective offset amounts. The attention area definer 34 defines an area having vertices of the high reflection points 54b and 54c and the offset points 55b and 55c, and defines this area as the attention area CA. The reference numeral 56 in FIG. 5 indicates an example range image with the attention area CA. The attention area CA may be illustrated with a highlight color different from the colors used for other portions to improve visibility.

The offset amounts may be determined with various methods. For example, the attention area definer 34 may determine the offset amounts adaptively based on the reflection intensity of the high reflection points. A higher reflection intensity (a highly reflective object having a surface with a higher reflectance) tends to cause a larger measurement error. Thus, the offset amount corresponding to the reflection intensity of each high reflection point may be calculated using, for example, a look-up table (LUT) or a function designed to include offset amounts monotonically increasing as the reflection intensity increases. The values of the reflection intensity may include variations and errors. Thus, the offset amounts for a group of high reflection points in close directions (in other words, a group of points substantially on the same reflective surface) may be set to the same value or close values by calculating individual offset amounts for the group of high reflection points in close directions and then determining a representative value (e.g., an average value, a maximum value, or an intermediate value) from the individual offset amounts.

The offset amount may be a fixed value instead of a variable. In one example, the attention area definer 34 may, for example, display a setting input screen and request a user to input an offset value, and the user may set the offset value. This user setting option is useful when a skilled worker or an expert can set an appropriate offset value based on the circumstances at the worksite. In some embodiments, an offset value (fixed value) recommended by the manufacturer of the laser scanner 20 may be used automatically. This option of setting a recommended value is useful in the absence of a skilled worker or an expert, or to prioritize safety over accuracy or to simplify the setting procedure.

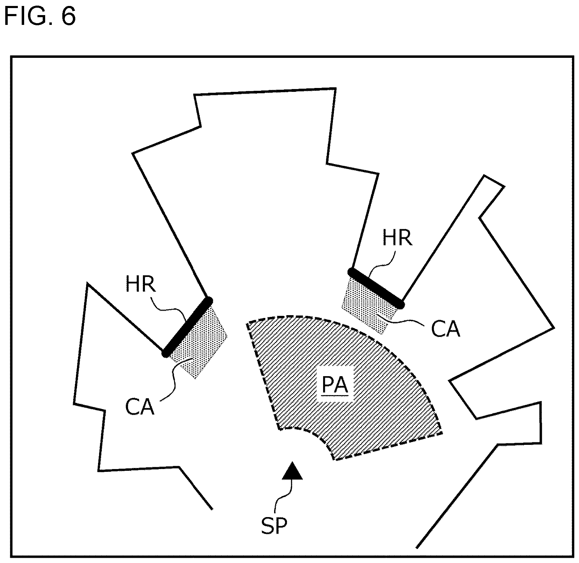

In step S46, the information displaying unit 35 causes the display to display the range image. In this case, the highly reflective object HR or the attention area CA may be superimposed on the range image. FIG. 6 shows an example range image displayed on the display. Two highly reflective objects HR are illustrated with the respective attention areas CA in front of the highly reflective objects HR. With information displayed in this manner, the presence of the highly reflective objects HR and the attention areas CA as the ranges to be affected by the highly reflective objects are visualized with respect to a position SP of the laser scanner 20. Thus, the user can easily and objectively determine whether any response is to be taken against the highly reflective objects HR or portions for which the response is to be taken.

In step S47, the monitoring area definer 36 defines the monitoring area. When a predefined monitoring area is available or when coordinate data of a monitoring area is imported from an external file, the monitoring area definer 36 loads the coordinate data of the monitoring area from the data storage 37 or the external device, and superimposes a monitoring area PA on the range image. When no predefined monitoring area or no monitoring area to be imported is available, a default monitoring area PA may be displayed initially. The monitoring area definer 36 then prompts the user to define the monitoring area PA. For example, an editing tool (graphical user interface, or GUI) for editing the coordinate points or the shape of the monitoring area PA on the range image may be provided to allow the user to define the monitoring area PA of an intended shape within an intended area using an input device such as a mouse or a touchscreen. To define the monitoring area PA inside the measurement area of the laser scanner 20, a limiting or checking function may be provided to prevent any portion of the monitoring area PA from extending outside the measurement area. FIG. 6 shows an example of a defined monitoring area PA. The user can define the monitoring area PA on the range image showing the attention area CA, and thus can avoid the attention area CA in defining the monitoring area PA or can define the monitoring area PA in an area including the attention area CA while being aware of the presence of the attention area CA (in other words, being aware of the occurrence of measurement errors).

In step S48, the report output unit 38 generates a document including various pieces of information about the definition of the attention area CA and the monitoring area PA. The document may include information about, for example, the calculation process performed to determine the offset values, the presence or absence of the highly reflective object HR or the attention area CA, the presence or absence of an overlap between the attention area CA and the monitoring area PA, and the measurement errors in the monitoring area PA. The generated document may be, for example, output as electronic data in a portable document format (PDF) or a comma separated value (CSV) format, or printed or displayed. The document may serve as evidence in checking whether the laser scanner 20 is set properly.

### <Processing Example 2>

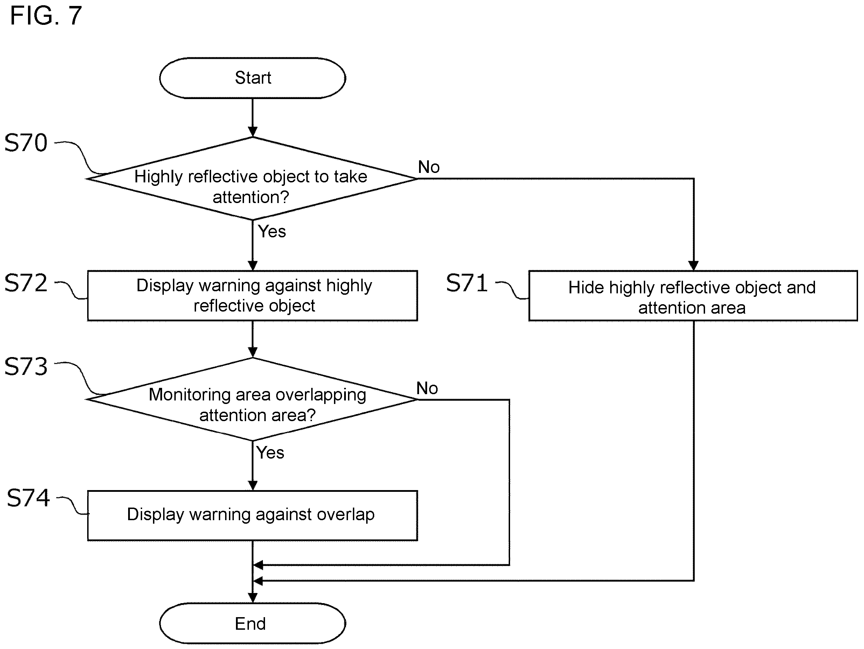

A processing example 2 is to examine whether the defined monitoring area PA is appropriate after the range image is generated and the highly reflective object HR, the attention area CA, and the monitoring area PA are defined. FIG. 7 is a flowchart of the processing example 2. This processing is performed, for example, after step S47 in the flowchart in FIG. 4 for each of the highly reflective objects HR detected within the measurement area. When the measurement area includes no highly reflective object HR, the processing in FIG. 7 is not performed.

The information displaying unit 35 first determines whether a highly reflective object HR takes attention with respect to the monitoring area PA (step S70). A highly reflective object HR is to take attention merely in measuring an object in front of the highly reflective object HR. When no monitoring area PA is located between the laser scanner 20 and the attention area CA corresponding to the highly reflective object HR, the highly reflective object HR and the corresponding attention area CA take no attention. The information displaying unit 35 causes such highly reflective objects HR and attention areas CA that take no attention to be hidden (step S71). Hiding such irrelevant information can improve user convenience. For a highly reflective object HR that takes attention, the information displaying unit 35 causes a warning indicating the presence of such a highly reflective object HR to be displayed (step S72).

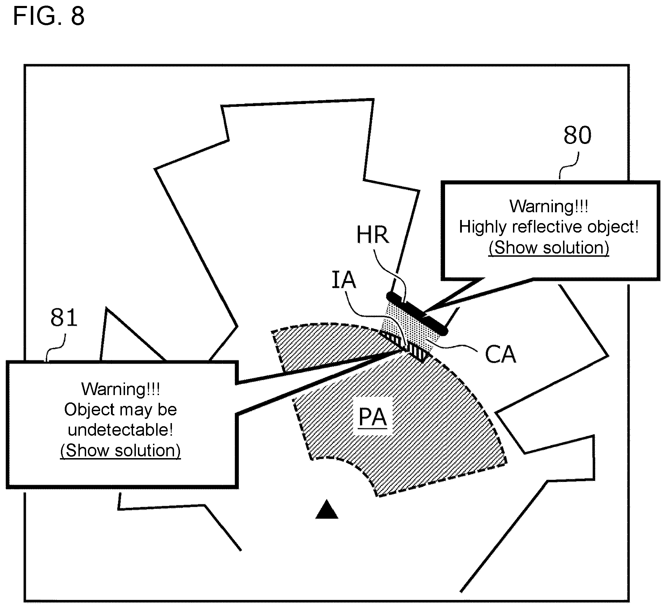

In step S73, the information displaying unit 35 determines whether the attention area CA overlaps the monitoring area PA. When the monitoring area PA at least partially overlaps the attention area CA, the information displaying unit 35 causes a warning to be displayed on the range image (step S74) to draw the user's attention. FIG. 8 shows example warnings. A warning 80 is overlaid near the highly reflective object HR that takes attention to notify the user of the presence of such a highly reflective object HR. An intersecting region IA in which the monitoring area PA overlaps the attention area CA is highlighted, with a warning 81 overlaid to notify the user of the presence of the intersecting region IA. These warnings 80 and 81 may have hyperlinks to documents containing solutions. In the example in FIG. 8, pressing a portion with "Show solution" allows display of the solution for the highly reflective object or the solution for the monitoring area overlapping the attention area CA.

The user viewing information displayed as described above can define a proper monitoring area PA easily by adjusting the defined monitoring area PA.

### <Processing Example 3>

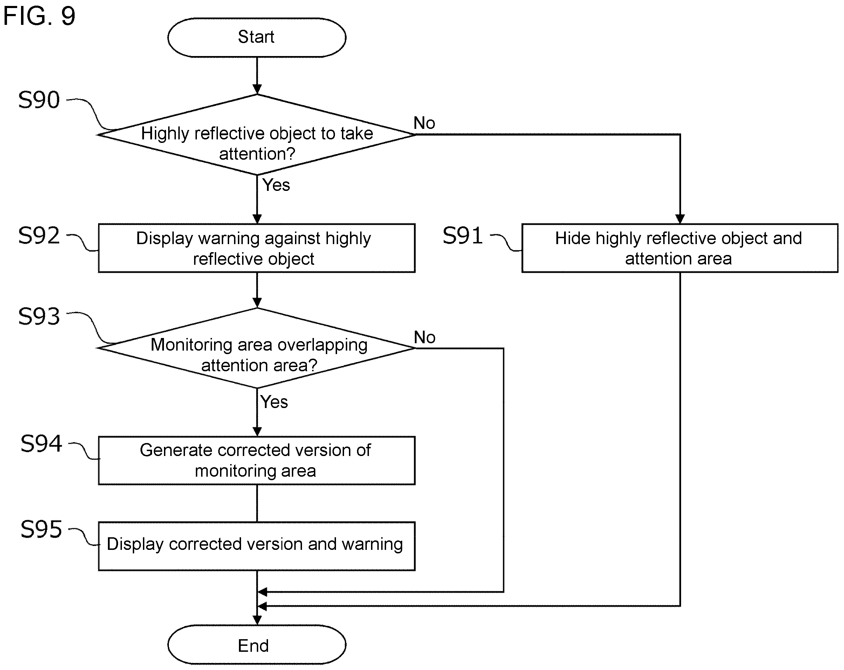

A processing example 3 is to recommend a proper monitoring area PA. FIG. 9 is a flowchart of the processing example 3. This processing is performed, for example, after step S47 in the flowchart in FIG. 4 for each of the highly reflective objects HR detected within the measurement area. When the measurement area includes no highly reflective object HR, the processing in FIG. 9 is not performed.

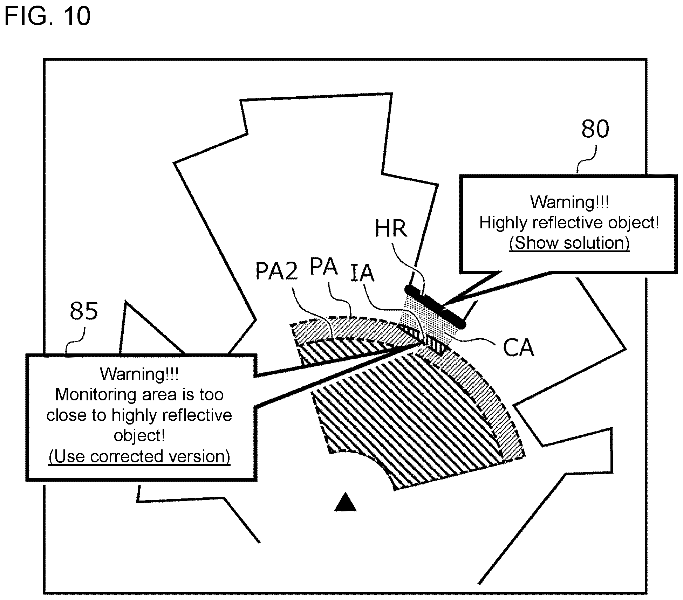

Steps S90 to S92 may be the same as steps S70 to S72 in FIG. 7. In step S93, the information displaying unit 35 determines whether the attention area CA overlaps the monitoring area PA. When the monitoring area PA at least partially overlaps the attention area CA, the information displaying unit 35 generates a corrected version of the monitoring area PA that does not overlap the attention area CA (step S94). The information displaying unit 35 then causes the corrected version of the monitoring area PA and a warning on the range image to be displayed (step S95). FIG. 10 shows an example recommendation display. The intersecting region IA in which the monitoring area PA overlaps the attention area CA is highlighted, with a warning 85 overlaid to notify the user of the presence of the intersecting region IA. A corrected version PA2 of the monitoring area is also overlaid. Pressing the portion of the warning 85 with "Use corrected version" replaces the defined monitoring area with the corrected version PA2.

This recommendation function allows the user to define a proper monitoring area PA easily.

### <Others>

The above embodiments describe exemplary structures according to one or more aspects of the present invention. The present invention is not limited to the specific embodiments described above, but may be modified variously within the scope of the technical ideas of the invention. For example, the sensor stationary in the above embodiments may be movable similarly to, for example, a laser scanner mounted on a mobile robot or another machine. For the movable sensor, the range image and information about the highly reflective objects or the attention areas are generated based on sequentially received measurement data, and the displayed range image may be updated at predetermined refresh intervals. In this case, simply the highly reflective objects or the attention areas that are spaced from the sensor by a distance less than or equal to a threshold may be displayed, and the highly reflective objects or the attention areas spaced by a distance greater than the threshold may be hidden. Instead of the determination based on the distance from the sensor, switching between displaying and hiding may depend on whether the distance from the edge of the monitoring area is greater than or equal to a threshold.

### <Appendixes>

1. A sensor system (1), comprising:
   a sensor (10; 20) configured to measure a distance to an object (O) by observing reflected electromagnetic waves from the object (O);
   a processing device (11; 21) configured to generate a range image (13; 50, 53, 56) indicating a distance to an object in a surrounding of the sensor (10; 20) based on measurement data obtained by the sensor (10; 20) measuring areas in a plurality of directions; and
   a display (12; 21) configured to display the range image (13; 50, 53, 56) generated by the processing device (11; 21),
   wherein the processing device (11; 21) includes
   a highly reflective object detector (33) configured to determine whether a highly reflective object (HR) is located within a measurement area of the sensor (10; 20) based on the measurement data, the highly reflective object (HR) being an object with a reflection intensity higher than a predetermined reference,
   an attention area definer (34) configured to define, when the highly reflective object detector (33) detects the highly reflective object (HR), an attention area (CA) between the highly reflective object (HR) and the sensor (10; 20), the attention area (CA) being an area with a likelihood of being affected by the highly reflective object (HR) to cause the sensor (10; 20) to have lower measurement accuracy, and
   an information displaying unit (35) configured to cause the attention area (CA) defined by the attention area definer (34) to be superimposed on the range image (13; 50, 53, 56) displayed on the display (12; 21).
2. A method for controlling a sensor system (1), the method comprising:
   (S40) measuring, with a sensor (10; 20), areas in a plurality of directions, the sensor (10; 20) being configured to measure a distance to an object (O) by observing reflected electromagnetic waves from the object (O);
   (S42) generating a range image (13; 50, 53, 56) indicating a distance to an object in a surrounding of the sensor (10; 20) based on measurement data obtained by the sensor (10; 20);
   (S46) displaying the range image (13; 50, 53, 56) with a display (12; 21);
   (S43) determining whether a highly reflective object (HR) is located within a measurement area of the sensor (10; 20) based on the measurement data, the highly reflective object (HR) being an object with a reflection intensity higher than a predetermined reference;
   (S45) defining, when the highly reflective object (HR) is detected, an attention area (CA) between the highly reflective object (HR) and the sensor (10; 20), the attention area (CA) being an area with a likelihood of being affected by the highly reflective object (HR) to cause the sensor (10; 20) to have lower measurement accuracy; and (S45) superimposing the defined attention area (CA) on the range image (13; 50, 53, 56) displayed on the display (12; 21).
3. A program for causing a processor in a processing device (11; 21) to perform operations comprising:
   (S41) obtaining measurement data obtained by measuring, with a sensor (10; 20), areas in a plurality of directions, the sensor (10; 20) being configured to measure a distance to an object (O) by observing reflected electromagnetic waves from the object (O);
   (S42) generating a range image (13; 50, 53, 56) indicating a distance to an object in a surrounding of the sensor (10; 20) based on the measurement data;
   (S46) displaying the range image (13; 50, 53, 56) with a display (12; 21);
   (S43) determining whether a highly reflective object (HR) is located within a measurement area of the sensor (10; 20) based on the measurement data, the highly reflective object (HR) being an object with a reflection intensity higher than a predetermined reference;
   (S45) defining, when the highly reflective object (HR) is detected, an attention area (CA) between the highly reflective object (HR) and the sensor (10; 20), the attention area (CA) being an area with a likelihood of being affected by the highly reflective object (HR) to cause the sensor (10; 20) to have lower measurement accuracy; and
   (S45) superimposing the defined attention area (CA) on the range image (13; 50, 53, 56) displayed on the display (12; 21).

### REFERENCE SIGNS LIST

- 1: sensor system
- 10: sensor
- 11: processing device
- 12: display
- 20: laser scanner
- 21: controller

## Claims

1. A sensor system, comprising:
a sensor configured to measure a distance to an object by emitting electromagnetic waves and observing reflected electromagnetic waves from the object;
a processing device configured to generate a range image indicating a distance to an object in a surrounding of the sensor based on measurement data obtained by the sensor measuring areas in a plurality of directions; and
a display configured to display the range image generated by the processing device,
wherein the processing device includes
a highly reflective object detector configured to determine whether a highly reflective object is located within a measurement area of the sensor based on the measurement data, the highly reflective object being an object with a reflection intensity higher than a predetermined reference,
an attention area definer configured to define, when the highly reflective object detector detects the highly reflective object, an attention area between the highly reflective object and the sensor, the attention area being an area with a likelihood of being affected by the highly reflective object to cause the sensor to have lower measurement accuracy, and
an information displaying unit configured to cause the attention area defined by the attention area definer to be superimposed on the range image displayed on the display.

2. The sensor system according to claim 1, wherein
the sensor includes
a light source,
a scanner configured to emit light output from the light source in the plurality of directions, and
a light receiver configured to receive reflected light from an object.

3. The sensor system according to claim 1 or claim 2, wherein
the processing device includes a monitoring area definer configured to define a monitoring area within the measurement area of the sensor, and the sensor monitors the monitoring area, and
the information displaying unit causes the monitoring area to be superimposed on the range image.

4. The sensor system according to claim 3, wherein
the information displaying unit causes the attention area to be superimposed on the range image when the monitoring area is located between the attention area and the sensor, and causes the attention area to be hidden when the monitoring area is not located between the attention area and the sensor.

5. The sensor system according to claim 3 or claim 4, wherein
the information displaying unit causes a warning to be displayed on the range image when the monitoring area at least partially overlaps the attention area.

6. The sensor system according to any one of claims 3 to 5, wherein
when the monitoring area at least partially overlaps the attention area, the information displaying unit recommends a corrected version of the monitoring area corrected not to overlap the attention area.

7. The sensor system according to any one of claims 1 to 6, wherein
the attention area definer defines, as the attention area, an area with a predetermined width extending from the highly reflective object toward the sensor.

8. The sensor system according to claim 7, wherein
the attention area definer determines the predetermined width based on a reflection intensity of the highly reflective object.

9. The sensor system according to claim 8, further comprising:
a report output unit configured to output information indicating a calculation process performed by the attention area definer to determine the predetermined width.

10. The sensor system according to claim 8, wherein
the attention area definer allows a user to set the predetermined width.

11. A method for controlling a sensor system, the method comprising:
measuring, with a sensor, areas in a plurality of directions, the sensor being configured to measure a distance to an object by emitting electromagnetic waves and observing reflected electromagnetic waves from the object;
generating a range image indicating a distance to an object in a surrounding of the sensor based on measurement data obtained by the sensor;
displaying the range image with a display;
determining whether a highly reflective object is located within a measurement area of the sensor based on the measurement data, the highly reflective object being an object with a reflection intensity higher than a predetermined reference;
defining, when the highly reflective object is detected, an attention area between the highly reflective object and the sensor, the attention area being an area with a likelihood of being affected by the highly reflective object to cause the sensor to have lower measurement accuracy; and
superimposing the defined attention area on the range image displayed on the display.

12. A program for causing a processor in a processing device to perform operations comprising:
obtaining measurement data obtained by measuring, with a sensor, areas in a plurality of directions, the sensor being configured to measure a distance to an object by emitting electromagnetic waves and observing reflected electromagnetic waves from the object;
generating a range image indicating a distance to an object in a surrounding of the sensor based on the measurement data;
displaying the range image with a display;
determining whether a highly reflective object is located within a measurement area of the sensor based on the measurement data, the highly reflective object being an object with a reflection intensity higher than a predetermined reference;
defining, when the highly reflective object is detected, an attention area between the highly reflective object and the sensor, the attention area being an area with a likelihood of being affected by the highly reflective object to cause the sensor to have lower measurement accuracy; and
superimposing the defined attention area on the range image displayed on the display.
